# EUROPÄISCHE PATENTSCHRIFT

(11) **EP 2 885 193 B1**
(45) Veröffentlichungstag und Bekanntmachung des Hinweises auf die Patenterteilung: **02.11.2016**
(21) Anmeldenummer: 14747035.5
(22) Anmeldetag: 04.08.2014
(51) Int. Cl.: B62D 1/16, B62D 1/185

(54) **FÜHRUNGSROHR FÜR LENKWELLE UND VERFAHREN ZU DESSEN HERSTELLUNG**
GUIDE TUBE FOR A STEERING SHAFT AND METHOD FOR PRODUCING SAME
TUBE DE GUIDAGE POUR ARBRE DE DIRECTION ET SON PROCÉDÉ DE FABRICATION

(30) Priorität: 06.08.2013 CH 13582013; 11.04.2014 CH 5612014
(43) Veröffentlichungstag der Anmeldung: 24.06.2015
(73) Patentinhaber: Adval Tech Holding AG, 3172 Niederwangen (CH)
(72) Erfinder: JÖHR, Hans, CH-3122 Kehrsatz (CH); MICHEL, Philipp, CH-3038 Kirchlindach (CH)
(74) Vertreter: Bremi, Tobias Hans
(86) Internationale Anmeldenummer: PCT/EP2014/066694
(87) Internationale Veröffentlichungsnummer: WO 2015/018781

(56) Entgegenhaltungen:
- WO-A1-01/94187
- US-A1- 2003 209 897
- US-A1- 2009 205 458
- US-A1- 2013 160 595

## Beschreibung

### TECHNISCHES GEBIET

Die vorliegende Erfindung betrifft ein Führungsrohr für eine Lenkwelle für ein Kraftfahrzeug, sowie ein besonders einfaches, schnelles, robustes und günstiges Verfahren zu dessen Herstellung.

### STAND DER TECHNIK

Die Lenkung bei einem Kraftfahrzeug ist in der Regel so aufgebaut, dass eine Lenkspindel, an welcher das Steuerrad befestigt ist, in einer Lagereinheit drehbar gelagert ist. Damit das Steuerrad in seiner Höhe verstellt werden kann ist die Lagereinheit in einer Weise am Chassis befestigt, dass die Lenkspindel in unterschiedlichen Positionen festgelegt werden kann. Dabei gibt es in der Regel ein Führungsrohr, welches die äusseren Lagerschalen des Lagers für die Lenkspindel aufnimmt.

Ein solches Führungsrohr ist in der Regel als zylindrisches Rohr ausgestaltet, wie dies insbesondere beispielsweise gattungsgemäss aus der EP 0 502 761 bekannt ist.

Ein solches Führungsrohr kann in der Lagereinheit axial auch beweglich gelagert werden, so dass gewissermassen die Lenkspindel in ihrer für den Benutzer spürbaren Länge verändert werden kann, wobei die unterschiedlichen axialen Positionen durch einen Kraftschluss und/oder Formschluss, meist mit einem Hebel oder einem Elektromotor, festgelegt werden können.

Dazu werden an einen solchen Führungsrohr nach dem Stand der Technik, vergleiche beispielsweise Gattung gemäss die EP 1 464 560, auf der Aussenseite separate schienenförmige Halterungselemente angeschweisst, die es ermöglichen, das Führungsrohr axial verschieblich in der Lagereinheit in unterschiedlichen Positionen festzulegen.

Die Herstellungsverfahren von solchen Führungsrohren umfassen mehrere Stufen und neben Stanz- und Umformprozessen von mehreren Teilen weisen sie den Nachteil auf, dass in Fügeprozessen die verschiedenen Bauteile miteinander verbunden werden müssen, beispielsweise in einem Schweissprozess.

Aus der US 2009/205458 ist ein Führungsrohr zur drehbaren Lagerung einer Lenkspindel eines Kraftfahrzeugs bekannt, wobei das Führungsrohr aus einem einzigen Blechabschnitt zylindrisch gerollt und an einer axialen Kontaktstelle verbunden ist. Dabei weist das Führungsrohr Elemente zur festlegbar axial verschieblichen Befestigung in einer Lagereinheit auf.

### DARSTELLUNG DER ERFINDUNG

Es ist entsprechend unter anderem Aufgabe der vorliegenden Erfindung, ein einfach und präzise herstellbares, leichtes Führungsrohr für eine Lenkwelle in einem Kraftfahrzeug zur Verfügung zu stellen, das sich zudem kostengünstig herstellen lässt.

Die Aufgabe dieser Erfindung wird durch ein Führungsrohr und ein Verfahren zu dessen Herstellung wie in den Ansprüchen angegeben gelöst.

Ein wesentlicher Kern der Erfindung besteht dabei darin, auf die nach dem Stand der Technik vorgesehenen separaten Halterungselemente auf der Aussenseite eines zylindrischen Rohres gänzlich zu verzichten und die Schnittstellen für die axial verschiebliche Halterung des Führungsrohrs direkt durch eine entsprechende Ausgestaltung der Wand des Rohres an sich mit wenigstens 2, über den Umfang verteilten Führungsnuten, zu gewährleisten. So kann aus einem einzigen gestanzten Blechteil in einem reinen Umformprozess ein solches Führungsrohr inklusive Schnittstelle für die axial verschiebliche Lagerung zur Verfügung gestellt werden, indem dieses nicht nur gerollt und an der Kontaktstelle verbunden und/oder geschweisst wird, sondern in dem gleichzeitig aus dem Blechmaterial axiale Sicken ausgebildet werden.

Spezifisch betrifft die vorliegende Erfindung ein Führungsrohr zur drehbaren Lagerung einer Lenkspindel eines Kraftfahrzeugs, wobei das Führungsrohr aus einem einzigen Blechabschnitt zylindrisch gerollt und an einer axialen Kontaktstelle verbunden ist, und wobei das Führungsrohr Elemente zur festlegbar axial verschieblichen Befestigung in einer Lagereinheit aufweist.

Erfindungsgemäss ist ein solches Führungsrohr insbesondere dadurch gekennzeichnet, dass die Elemente in Form von wenigstens zwei über den Umfang verteilten, axial verlaufenden, umfangsmässig beidseits von den Zylinderumfang erweiternden Rippen gebildete Sicken ausgebildet sind, die im Blechabschnitt ausgeformt sind. In diese Sicken können dann wenigstens 4 Kugeln, normalerweise ein ganzer Kugelkäfig, der in einer entsprechenden Nut in der Lagereinheit vorgesehen ist, eingreifen, so dass eine saubere axiale Lagerung vorliegt.

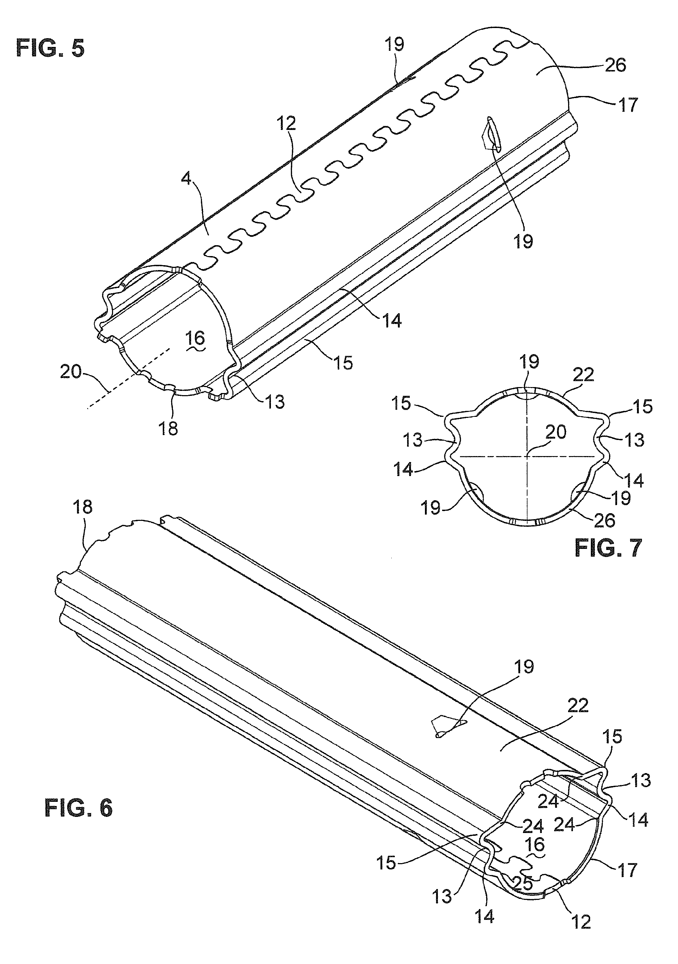

Gemäss einer ersten bevorzugten Ausführungsform ist ein solches Führungsrohr dadurch gekennzeichnet, dass genau zwei Sicken ausgebildet sind, und diese symmetrisch auf zwei gegenüberliegende Seiten gerichtet sind. Dies bedeutet, dass sie, wie beispielsweise in Figur 7 dargestellt, dazu vorgesehen sind, durch zwei an gegenüberliegenden und parallel verlaufenden Wänden im Innenraum der Lagereinheit angeordnete Kugellager gelagert zu sein.

Gemäss einer weiteren bevorzugten Ausführungsform sind die beiden Sicken im gleichen

Halbraum bezogen auf eine zentrale Achse des Führungsrohrs angeordnet. Dies bedeutet, dass sie, wie dies beispielsweise in Figur 7 dargestellt ist, mit ihren tiefsten Punkt bezogen auf die Achse unter einem Winkel von weniger als 180° angeordnet sind.

Die axiale Kontaktstelle ist vorzugsweise an einem Umfangsabschnitt zwischen den beiden Sicken angeordnet, vorzugsweise am längeren Umfangsabschnitt.

Gemäss einer weiteren bevorzugten Ausführungsform erstrecken sich die Sicken nicht nur über einen Abschnitt, sondern über die gesamte axiale Länge des Führungsrohrs.

Die Sicken können eine von einer Kreisform verschiedene Aussenkontur bilden, so dass darin laufende Kugeln an zwei gegenüberliegenden definierten Punkten an Flanken der Rippen zur Anlage kommen. Beispielsweise ist es bevorzugt, wenn diese Punkte bezogen auf die Kugeln ungefähr unter einem Winkel von im Bereich von 60-100° angeordnet sind. Ein solches Führungsrohr ist vorzugsweise aus einem Metall gefertigt, vorzugsweise aus einem Stahl, insbesondere bevorzugt aus einem Schwarzstahl. Dies bevorzugter Massen mit einer Dicke im Bereich von 1.5-2.5 mm.

Ein solches Führungsrohr kann gemäss einer weiteren bevorzugten Ausführungsform zusätzlich Durchsetzungen als Anschläge für die äussere Lagerschale der Lenkspindel aufweisen, wobei vorzugsweise an einem, insbesondere an beiden Enden des Führungsrohrs wenigstens zwei, vorzugsweise wenigstens 3 derartige Durchsetzungen über den Umfang verteilt angeordnet sind.

Eine weitere bevorzugte Ausführungsform eines solchen Führungsrohrs ist dadurch gekennzeichnet, der Blechabschnitt an der Kontaktstelle über eine Schweissverbindung und/oder Punktschweissverbindung und/oder eine Schwalbenschwanzverbindung verbunden ist.

Des weiteren betrifft die vorliegende Erfindung ein Verfahren zur Herstellung eines derartigen Führungsrohrs. Ein solches Verfahren ist insbesondere bevorzugt dadurch gekennzeichnet, dass ausgehend von einem gestanzten Blechabschnitt in einem Umformprozess das Führungsrohr gerollt und gleichzeitig die Rippen und die Sicken ausgebildet werden.

Gemäss einer ersten bevorzugten Ausführungsform dieses Verfahrens wird dieses das Verfahren mehrstufig durchgeführt und die einzelnen Umfangsabschnitte werden bevorzugter Massen sequenziell von einer zentralen axialen Mittellinie ausgehend auf beide Seiten umgeformt wobei in einem letzten Schritt an der Kontaktstelle das Führungsrohr geschlossen wird, vorzugsweise unter Verwendung von ausschliesslich

Umformvorgängen und ohne Schweissvorgänge.

Das Verfahren kann wenigstens vier, vorzugsweise wenigstens acht Stufen, insbesondere zwischen 8 und 12 Stufen aufweisen.

Gemäss einer weiteren bevorzugten Ausführungsform des vorgeschlagenen Verfahrens weist der gestanzte Blechabschnitt an wenigstens einem, vorzugsweise an den beiden axialen Enden Handling-Abschnitte auf, die im Bereich der axialen Mittellinie mit dem Blech des eigentlichen Führungsrohrs während des Herstellungsverfahrens verbunden sind und danach vom Führungsrohr abgetrennt werden.

Eine weitere bevorzugte Ausführungsform des vorgeschlagenen Verfahrens setzt sich zum Ziel, die Rundheit des Lagersitzes bei einem mit Sicken versehenen Führungsrohr noch weiter zu verbessern. Hierzu kann ein zylindrischer Dorn, dessen Aussendurchmesser dem gewünschten Innendurchmesser des Führungsrohres im wesentlichen entspricht, in den Bereich des Lagersitzes in den Innenraum des Führungsrohres eingebracht und anschliessend mit Hilfe eines von aussen angreifenden Werkzeugs das Material gezielt in Umfangsrichtung des Dorns zum plastischen Fliessen gebracht werden. Dies geschieht durch eine Krafteinleitung auf die Führungssicken mit Hilfe eines spezifischen Werkzeugs mit zwei Matrizen. In ersten Versuchen konnte durch die Anwendung dieses Verfahrens eine Verbesserung der Rundheitstoleranz von ca. 0,13mm auf ca. 0,06mm erreicht werden. Es ist zu betonen, dass es sich bei diesem Kalibrier-Verfahren um ein Verfahren handelt, das nicht nur im Zusammenhang mit einem Führungsrohr, wie es oben beschrieben wurde, Anwendung finden kann, sondern generell bei einem gerollten Metallrohr, vorzugsweise bei einem aus einem einzigen Metallstück gerollten Metallrohr. Bei einem Führungsrohr, wie es oben beschrieben wurde, greift das von aussen angreifende Werkzeug in den konkaven Übergangsbereich von beiden Seiten, um die Verschiebung zu bewirken. Bei einer derartigen allgemeineren Anwendung kann beispielsweise ein Metallrohr kalibriert werden, welches auf nur einer Seite nur eine einzige axial verlaufende Rippe aufweist, wobei dann das Werkzeug in den konkaven Übergangsbereich zu dieser Rippe oben respektive unten eingreift, oder es kann ein Metallrohr kalibriert werden, bei welchem auf zwei gewissermassen gegenüberliegenden Seiten eine einzige derartige Rippe angeordnet ist. Auch können Rohre bearbeitet werden, welche mehr als eine Sicke auf jeder Seite haben, oder Rohre, bei welchen grundsätzlich andere axiale Strukturen vorgesehen sind, welche eine Krafteinleitung durch das Werkzeug ermöglichen. Generell ist also hinsichtlich dieser spezifischen Durchführung des Verfahrens in der Folge wenn von einem Führungsrohr die Rede ist auch allgemein ein gerolltes Metallrohr mit einer sich axial erstreckenden Verbindungsstelle zu verstehen.

Entsprechend betrifft die vorliegende Erfindung gemäss einer weiteren bevorzugten Ausführungsform ein Verfahren wie es oben beschrieben worden ist, welches dadurch gekennzeichnet ist, dass nach dem Schliessen des Führungsrohres (oder eben allgemein generell eines gerollten Metallrohres) dieses wenigstens in einem der zur Aufnahme des Lagers vorgesehenen Endbereiche zur Erhöhung der Rundheit nachbearbeitet wird, indem ein zylindrischer Dorn in den Innenraum des Endbereichs eingeführt wird und mit zwei Matrizen in Umfangsrichtung des Dorns zum plastischen Fliessen gebracht wird. Dies geschieht vorzugsweise so, dass die Matrizen, vorzugsweise in einem Arbeitsschritt auf beiden Seiten des Führungsrohres, über entsprechende Anlagebereiche den Übergangsbereich vom unteren Krümmungsbereich zur unteren axialen Rippe in Umfangsrichtung auf den Übergangsbereich vom oberen Krümmungsbereich zur oberen axialen Rippe durch Krafteinleitung verschieben. Vor diesem Verfahrensschritt zur Erhöhung der Rundheit kann das Führungsrohr ggf. zunächst nachbearbeitet werden, z.B. indem eine erzeugte Schwalbenschwanzverbindung an der Kontaktstelle punkt- oder bereichsweise nachverschweisst wird und/oder weitere Elementen, wie insbesondere Verstärkungsprofile und/oder Crashelemente, am Führungsrohr angeschweisst werden. Um diese Kalibrierung auf den axialen Abschnitt zu beschränken, der tatsächlich zu höherer Präzision gebracht werden muss, kann es von Vorteil sein, wenn das Führungsrohr über einen Umfangsabschnitt im Bereich der Sicken respektive Rippen, vorzugsweise auf beiden Seiten, über einen Schlitz, eine so genannte Freistanzung verfügt. Dieser Schlitz trennt gewissermassen in diesem Umfangsbereich den zu bearbeitenden (zu kalibrierenden) Bereich vom nicht zu bearbeitenden Bereich. Dies führt dazu, dass der bearbeitete Bereich vom übrigen, nicht bearbeiteten Bereich entkoppelt wird und so die Stabilisierungswirkung der Rippen im nicht bearbeiteten Bereich keinen Einfluss auf den bearbeiteten Bereich hat. Dadurch kann die Kalibrierung im bearbeiteten Bereich in noch grösserer Präzision durchgeführt werden.

Gemäss einer weiteren bevorzugten Ausführungsform dieses Verfahrens weist wenigstens einer der Anlagebereiche, vorzugsweise beide, einen dem Aussenumfang des Führungsrohres über einen begrenzten Umfangsabschnitt folgenden, der jeweiligen Rippe abgewandten Umfangsanlagebereich auf.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine gesamte Lagereinheit in einer Seitenansicht;
- Fig.2: die Lagereinheit gemäss Figur 1 in einer perspektivischen Ansicht;
- Fig. 3: ein Schnitt gemäss A-A wie in Figur 1 angegeben durch eine solche Lagereinheit;
- Fig. 4: ein Schnitt gemäss B-B wie in Figur 1 angegeben durch eine solche Lagereinheit;
- Fig. 5: ein Führungsrohr in einer perspektivischen Ansicht von unten;
- Fig. 6: ein Führungsrohr in einer perspektivischen Ansicht von oben;
- Fig. 7: Schnitt durch ein solches Führungsrohr;
- Fig. 8: in a)-1) die einzelnen Stufen des Herstellungsverfahrens im Umformprozess nach dem Stanzen des Rohlings, wobei jeweils oben eine Aufsicht dargestellt ist, in der Mitte eine perspektivische Ansicht und unten eine Schnittdarstellung in einer Ebene senkrecht zur Achse des entstehenden Führungsrohrs;

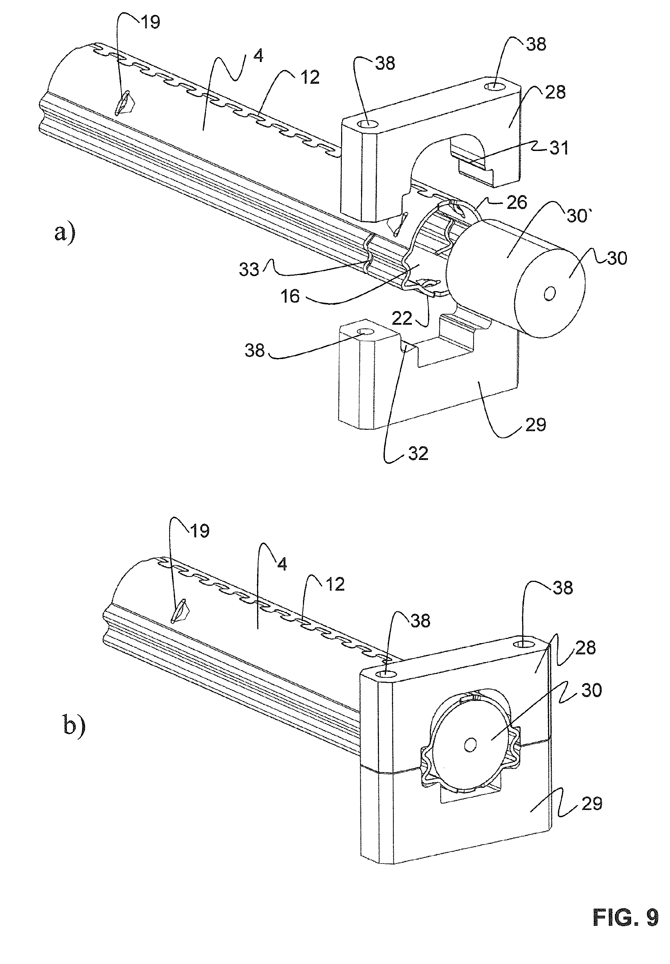

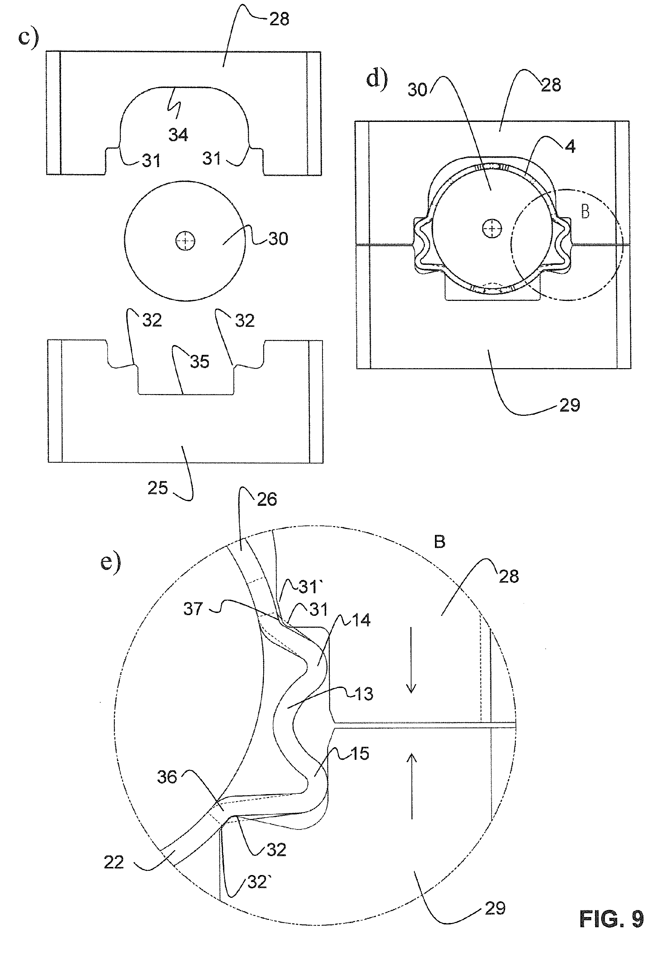

- Fig. 9: verschiedene Ansichten einer Vorrichtung zur Nachbearbeitung eines Führungsrohres (oder generell eines Metallrohres) zur Erhöhung der Rundheit in einem Abschnitt, insbesondere im Bereich des Lagersitzes, wobei in a) das offene Werkzeug in einer perspektivischen Ansicht, in b) das geschlossene Werkzeug in einer perspektivischen Ansicht, jeweils mit Führungsrohr, dargestellt ist, in c) eine Sicht auf das Werkzeug in axialer Richtung in offener Position ohne Führungsrohr, in d) eine Sicht auf das Werkzeug in axialer Richtung in geschlossener Position mit Führungsrohr, und in e) die Detailansicht gemäss B in Fig. 9d; und
- Fig. 10: ein Führungsrohr in einer perspektivischen Ansicht von unten, von der einen (a) und der anderen (b) Seite.

### BESCHREIBUNG BEVORZUGTER AUSFÜHRUNGSFORMEN

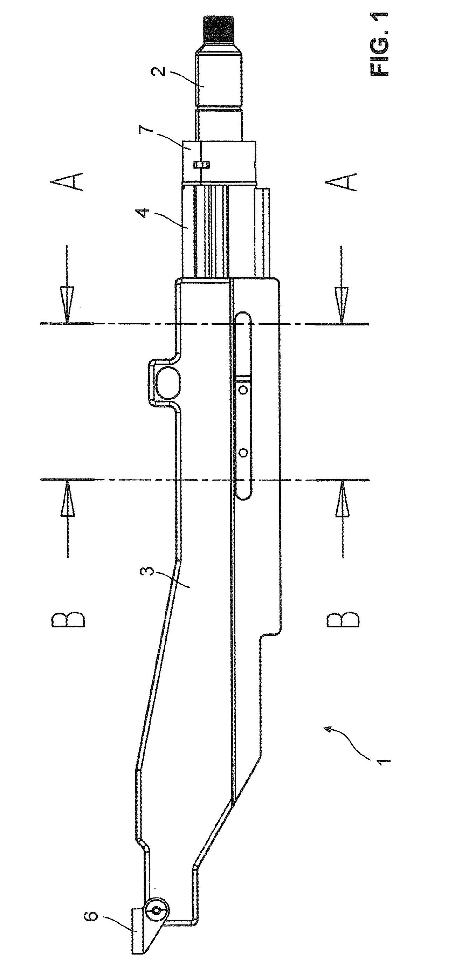

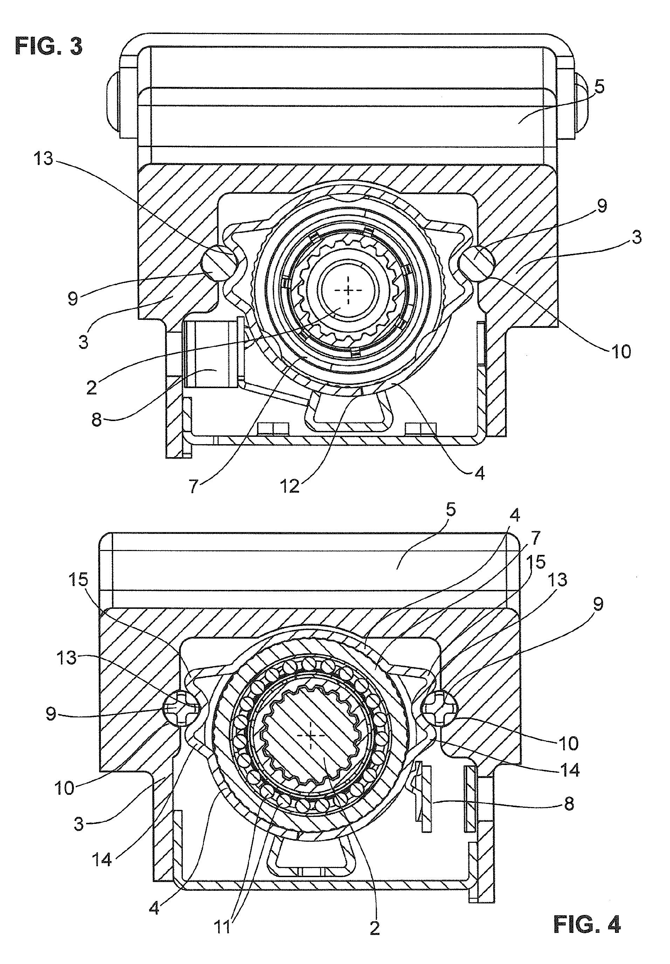

In den Figuren 1 bis 4 ist eine ganze Lagereinheit 1 mit einem Führungsrohr 4 eingebaut dargestellt. In Figur 1, einer seitlichen Ansicht, ist insbesondere erkennbar, wie an der oberen vorderen Seite die Lenkspindel 2 aus der Lagereinheit 1 hervorsteht. Die Lenkspindel 2 ist, wie sich dies insbesondere aus Figur 4 erschliesst, in einem Lager gelagert und zwar mit einer äusseren Lagerschale 7, die im Führungsrohr 4 befestigt ist. Konkret ist das Lager mit der Lagerschale 7 und den Kugeln 11 im Führungsrohr eingepresst. Ein korrespondierendes Lager gibt es auch am anderen Ende des Führungsrohres, dieses ist aber in den Figuren 1 bis 3 nicht erkennbar, sehr wohl aber in Figur 4, dort ist es im Schnitt direkt durch die Kugeln dargestellt.

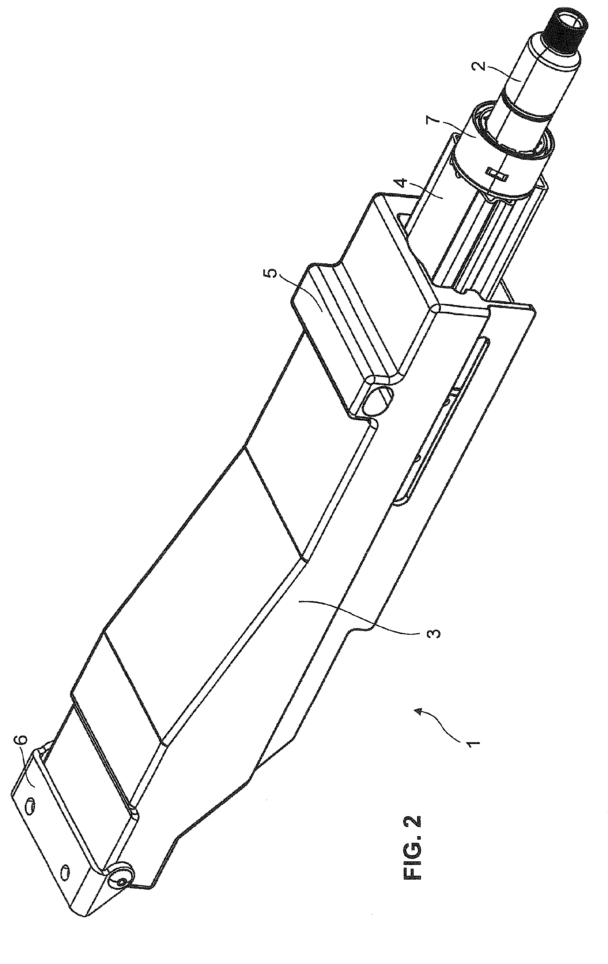

An der eigentlichen Lagereinheit 1 gibt es Befestigungselemente 5 für Funktionsbauteile sowie insbesondere ein über ein Drehlager angeordnetes Befestigungselement 6 für die direkte oder indirekte Befestigung am Querträger des Chassis. Das kastenförmige Aussengehäuse 3 ist dabei i.d.R. ein Druckgussteil (vgl. insbesondere Figur 2), welches einen axial verlaufenden Hohlraum zur Aufnahme des Führungsrohres 4 zur Verfügung stellt.

Wie aus Figur 3 ersichtlich gibt es in diesem kastenförmigen Aussengehäuse im Innenraum zwei gegenüberliegende rinnenförmige Vertiefungen 10, die axial verlaufen und jeweils gegenüberliegende Kugellagerkäfige mit den Kugeln 9 aufnehmen. Diese Kugeln 9 sind damit in den Vertiefungen 10 auf der einen Seite gefangen und auf der anderen Seite durch axial verlaufende Sicken 13, die im Blech des Führungsrohrs 4 ebenfalls über die ganze Länge verlaufend ausgeformt sind. Damit ist das Führungsrohr 4 im Kasten 3 über das Kugellager 9 axial verschieblich gelagert. Dies in einer bei einer bestimmten gewünschten Stellung festlegbaren Weise, d.h. es gibt zudem einen Mechanismus, der es erlaubt, das Führungsrohr nach verschieben an die richtige axiale Position in dieser festzulegen, z.B. über einen Kraftschluss oder einen Formschluss oder eine Kombination. Hier gibt es zu diesem Zweck ein Verbindungselement 8, welches, wenn über einen Hebel oder einen Motor betätigt, die axiale Position kraftschlüssig festlegt. Alternativ ist es möglich, hier einen Kraftschluss zu ersetzen durch ein Stangenzahnrad oder eine ähnliche Lösung, die über z.B. einen Elektromotor oder eine Kurbel betätigt wird.

Wie aus Figur 4 ersichtlich verfügt das Führungsrohr über zwei seitlich derartige Sicken 13 die den parallel angeordneten und gegenüberliegenden Wänden des Innenraums des Kastens 3 zugewandt sind. Die eigentlichen Sicken 13 werden durch zwei axial verlaufende Rippen gebildet, durch jeweils eine untere Rippe 14 und eine obere Rippe 15. Die beiden Sicken 13 sind beide oberhalb einer Äquatorebene (im oberen Halbraum nach der Schnittdarstellung in Fig. 7) angeordnet, so dass dann wegen der wechselseitigen Ausrichtung nach seitlich aussen die obere Rippe 15 wesentlich weiter vom Umfang des Führungsrohr auskragt.

In Figur 5 bis 7 ist das Führungsrohr in einer perspektivischen Ansicht von unten (Figur 5) resp. von oben (Figur 6) und in einem axialen Schnitt (7) dargestellt. Hier ist erkennbar dass das Führungsrohr aus einem einzigen Blechabschnitt gefertigt ist, der an der Unterseite über einen Schwalbenschwanzverbindungsschluss, gegebenenfalls unterstützt durch ein Schweissen oder Punktschweissen, verbunden ist. Die Schwalbenschwanzverbindung 12 ist also im unteren Krümmungsbereich 26 angeordnet, d.h. im langen Krümmungsbereich. Der kurze Krümmungsbereich 22 bildet die Oberseite. Der obere Krümmungsbereich 22 und der untere Krümmungsbereich 26 sind auf der gleichen Kreis-Zylinderfläche angeordnet und bilden den eigentlichen zylindrischen Hohlkörper, der den Innenraum 16 des Führungsrohres umschliesst und die Längsachse 20 definiert.

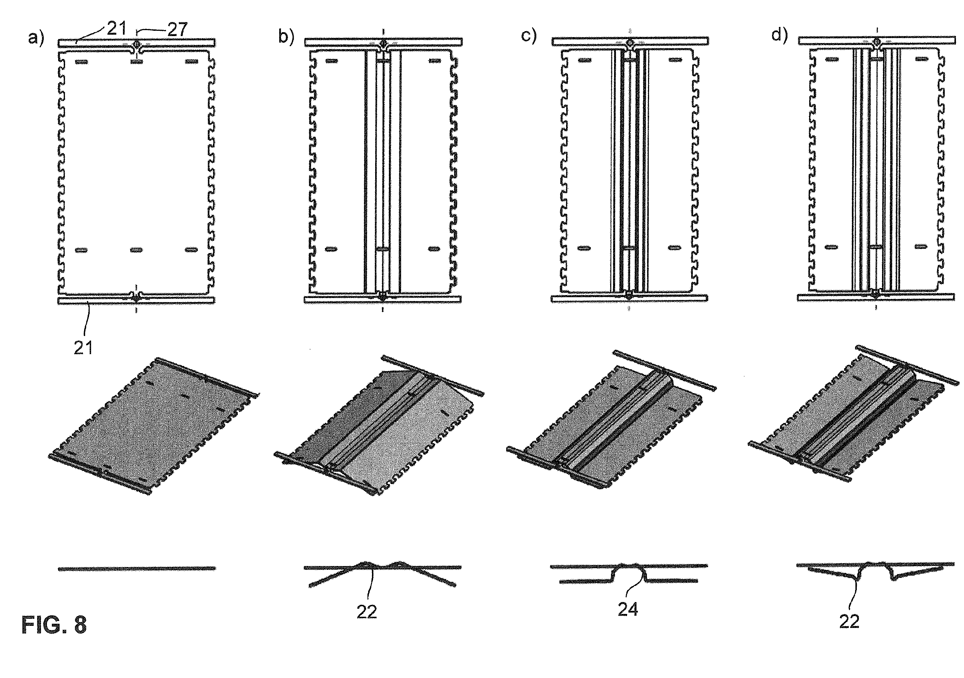

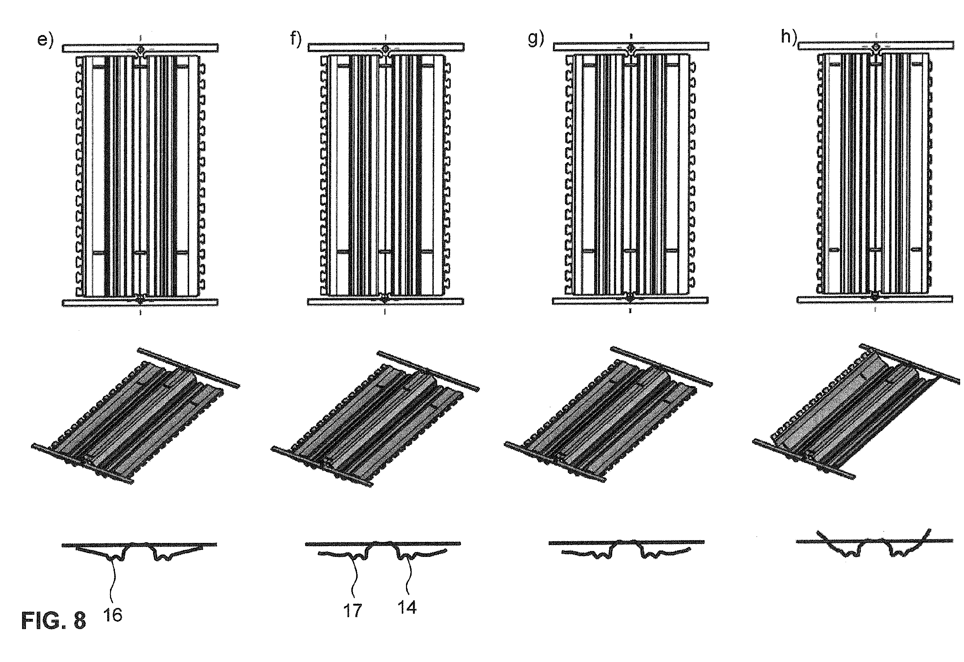

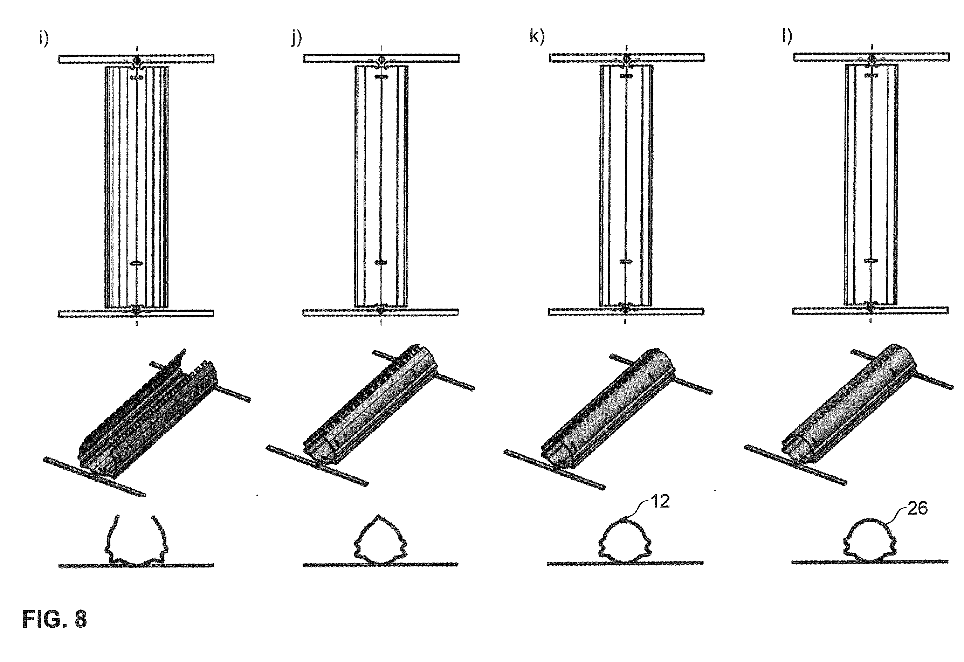

Ausgehend von den Knicken 24 und 25 sind von dieser zylindrischen Grundstruktur die beiden seitlichen Sicken 13, die durch die Rippen 14 und 15 gebildet werden, ausgeformt. Zudem verfügt das Führungsrohr über Durchsetzungen 19, die als Anschläge für die äussere Lagerschale 7 sowohl auf der vorderen Seite 17 als auch an der hinteren Seite 18 (in den Figuren 5 bis 7 nicht dargestellt aber in Figur 8) dienen.

In Figur 8 ist ein Herstellungsverfahren für ein solches Führungsrohr dargestellt. Ausgehend von einem gestanzten Blechabschnitt wie in Figur 8a dargestellt, wo bereits an den lateralen Kanten die Kontur für die Schwalbenschwanzverbindung vorgebildet ist und zusätzlich an den beiden Enden Handling-Streifen 21 vorgesehen sind, die im Umformprozess nicht weiter bearbeitet werden, aber zur Halterung des Bauteils während der Umformprozesse dient, d.h. nur im Bereich der Mittellinie 27 mit dem das endgültige Führungsrohr bildenden Blech verbunden sind.

In einem ersten Umformschritt wird nun ein erster Teil des oberen Krümmungsbereichs 22 gebildet. Nach dieser ersten Stufe im Bild b) wird in einem nächsten Schritt der Knick 24 für den Übergang zur oberen Rippe 15 ausgebildet, wie dies dann in Figur c) dargestellt ist. In einem anfolgenden Schritt wird die Kuppe der Rippe 15 umgeformt und die seitlichen Blechabschnitte wieder nach oben umgelegt, wie das im Resultat in Figur d) dargestellt ist. In den nächsten Schritten e)-g) werden die einzelnen Rippen ausgebildet, wobei gegebenenfalls dies auch in einer oder nur in zwei Stufen erfolgen kann. Hier sind drei Stufen dargestellt, in einer ersten Stufe wird die innere Rippe fertigstellt, die dann die obere Rippe 15 bildet, in einem zweiten Schritt die weiter aussenliegende Rippe 14, die dann die untere Rippe bilden wird, und im letzten Schritt, dessen Resultat in Figur g) dargestellt ist, wird dann die Ausbildung dieser beiden Rippen noch einmal kalibriert und relativ zueinander eingestellt.

Im anfolgenden Schritt, dessen Resultat in Figur h) dargestellt ist, wird nun ein erster Bereich des unteren Krümmungsbereich ausgebildet, in den anfolgenden Schritten deren Resultate in i) und j) dargestellt sind, wird dieser Bereich im Wesentlichen geschlossen, um dann in den abschliessenden Schritten k) und l) ganz geschlossen zu werden in einer Weise, dass dann auch die Schwalbenschwanzverbindung 12 geschlossen ist und der untere Krümmungsbereich 26 vollständig zylindrisch ausgebildet ist. Hier nicht mehr dargestellt ist die letzte Operation, welche die Entfernung der Handling-Streifen 21 umfasst.

Ein solches Verfahren erlaubt es, ein Führungsrohr, bei welchem Elemente zur axial verschieblichen aber festlegbaren Halterung in einem Kasten aus dem Material des Rohres und einstückig mit diesem vorgesehen sind, das Verfahren ist einfach, schnell, kostengünstig und sehr robust und erlaubt entsprechend eine sehr effiziente Herstellung eines solchen Lagerungskastens mit hoher Steifigkeit und geringem Gewicht.

Ein Führungsrohr, welches nach dem oben beschriebenen Verfahren hergestellt ist, weist durch den mehrstufigen Rollvorgang eine hervorragende Präzision über die gesamte Länge auf. Um im Bereich des Lagersitzes, das heisst an wenigstens einem Ende des Rohres, eine noch präzisere Rundheit zu gewährleisten, kann es von Vorteil sein, in einem weiteren nachgeschalteten Schritt den Bereich des Lagersitzes zu kalibrieren. Dieses Verfahren, mit welchem insbesondere die Rundheit in diesem Endbereich verbessert werden kann, soll anhand der Darstellungen in Figur 9 erläutert werden.

Zur Kalibrierung wird ein Werkzeug vorgesehen, welches einen zylindrischen zentralen Dorn 30 aufweist, der dazu vorgesehen ist, in den Endabschnitt des Innenraums 16 des Führungsrohres 4 während der Bearbeitung von einer oder beiden Seiten, je nach dem ob eines oder beide Enden nachbearbeitet werden sollen, eingeschoben zu werden. Die zylindrische Aussenfläche 30' dieses Dorns 30 entspricht dabei im Wesentlichen dem gewünschtem Innendurchmesser der beiden Krümmungsbereiche 22 und 26 des Führungsrohres.

Des Weiteren umfasst das Werkzeug eine untere Matritze 28 und eine obere Matrize 29, die über Führungselemente 38 in Form von Führungsöffnungen verfügen, sodass sie direkt miteinander gekoppelt geführt werden können. Es ist aber alternativ auch möglich, die beiden Werkzeuge in einem Säulengestell zu lagern, so dass Sie nicht direkt miteinander gekoppelt geführt werden. Die Matrizen 28 und 29 verfügen über jeweils einen das Führungsrohr umgreifenden Ausschnitt, der jeweils auf gegenüberliegenden Seiten einen Anlagebereich 31, 32 aufweist. In den zwischenliegenden Bereichen 34 respektive 35 kommen die Ausschnitte nicht in Kontakt mit dem Führungsrohr 4 bei der Bearbeitung. Mit anderen Worten sind die Anlagebereiche 31 und 32 gewissermassen nur bereichsweise und ganz gezielt an den entscheidenden Stellen in Kontakt mit dem Führungsrohr 4, jedes Werkzeug verfügt über zwei symmetrisch angeordnete Anlagebereiche.

Die Anlagebereiche 31 und 32 sind dabei als sich axial entlang der Aussenkontur des Führungsrohres erstreckende Nasen ausgebildet, die in den konkaven Knick zwischen dem unteren Krümmungsbereich 26 und der unteren axialen Rippe 14 respektive in den Übergangsbereich zwischen oberen Krümmungsbereich 22 und der oberen axialen Rippe 15 eingreifen. Wie dies insbesondere anhand der Detailzeichnung gemäss Figur 9e erkannt werden kann, führt das bewegen der beiden Matrizen 28/29 auf einander zu gemäss den in Figur 9e dargestellten Pfeilen dazu, dass die Anlagebereiche 31 und 32 in den jeweiligen konkaven Übergangsbereich 37 respektive 36 gewissermassen eingreifen und dort das Material in Umfangsrichtung verschieben und damit zum fliessen bringen, und so die Bereiche 37/36 in Umfangsrichtung aufeinander zu bewegen. So wird das Material des Führungsrohres aus der ursprünglichen, in Figur 9e gestrichelt dargestellten Position umgeformt und verschoben zur ausgezogenen Linie, und da bei diesem Vorgang eine weitergehende Umformung um den ganzen Umfang in Folge des plastischen fliessens erfolgt, wird so die Rundheit um den ganzen Umfang wesentlich verbessert.

Um den Prozess gut kontrollieren zu können kann es von Vorteil sein, wenn die Anlagebereiche jeweils in dem den Rippen abgewandten Bereich einen Umfangsanlagebereich 31' respektive 32' aufweisen, die dort im Wesentlichen dem Umfang auf der Aussenseite des Führungsrohres folgen.

Typischerweise bewegt sich die effektive Verschiebung bei einem Führungsrohr mit einem Durchmesser von 45 mm im Bereich von nicht mehr als 1.5 mm, typischerweise im Bereich von 0.5-1.0 mm, betrachtet man die relative Verschiebung der beiden Matrizen aufeinander zu entlang den in der Fig. dargestellten Pfeilen in der Phase mit Kontakt zwischen Werkzeug und bearbeitetem Werkstück.

Im Resultat kann durch dieses nachgeschaltete Kalibrierverfahren die Rundheitstoleranz von typischerweise ca. 0.13mm auf ca. 0.06mm reduziert werden.

Die Rundheitstoleranz kann weiter erhöht werden, indem eine in den Figuren dargestellten Freistanzung 33, d.h. gewissermaßen ein Schlitz, der den bearbeiteten Bereich von nichtbearbeiteten Bereich des Rohres, insbesondere im Bereich der Rippen und nur in diesem, trennt, vorgesehen wird. Dadurch wird der Kalibrierbereich vom Rest des Rohres entkoppelt, und die Kalibrierung wird genauer, weil die Sicken im Bereich des nichtbearbeiteten Rohres nicht stabilisierend wirken können.

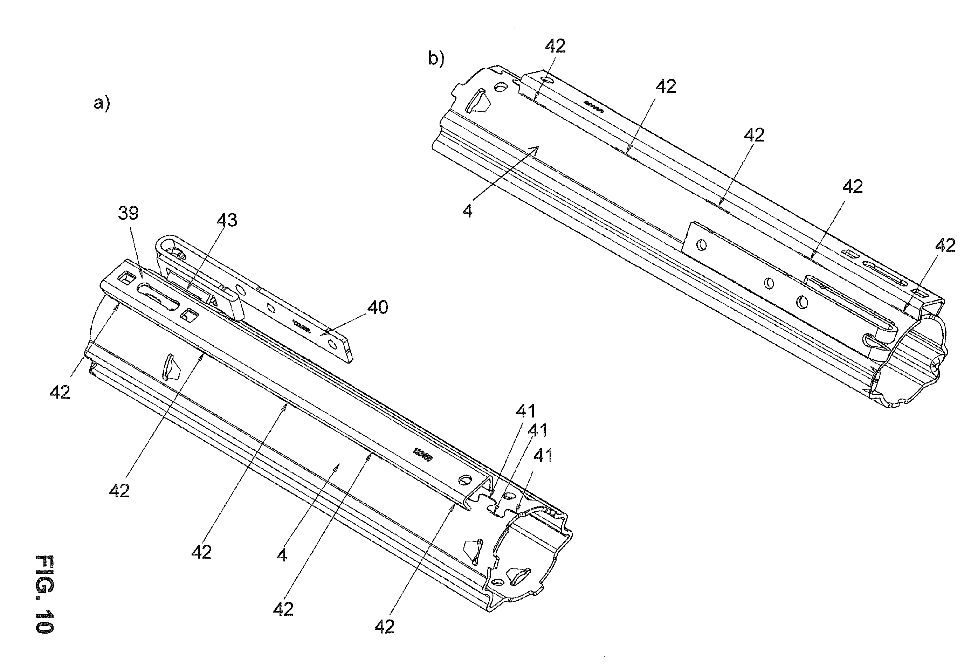

Das im Zusammenhang mit Fig. 9 oben dargelegte Verfahren zur Verbesserung der Rundheit in den Endbereichen des Führungrohres kann entweder, wie das in Fig. 9 dargestellt ist, am grundsätzlich noch nicht weiter verarbeiteten Führungsrohr 4 durchgeführt werden. Es ist aber auch möglich, das Verfahren zur Verbesserung der Rundheit an einer noch weiter verarbeiteten Einheit, d.h. an der Baugruppe, anzuwenden. So ist es beispielsweise möglich, dass das Führungsrohr 4, nachdem es gewissermaßen nach Durchlaufen der in Fig. 8 dargestellten Schritte in den Zustand gemäss den Figuren 5-7 gebracht wurde, weiter bearbeitet wird, bevor das Verfahren zur Kalibrierung der Endbereiche angewendet wird. Dies insbesondere, indem, wie dies in Fig. 10 dargestellt ist, vor der Durchführung des Verfahrens zur Verbesserung der Rundheit die Schwalbenschwanzverbindung durch zusätzliche Schweißstellen, die in Fig. 10 mit dem Bezugszeichen 41 angegeben sind, verstärkt wird. Die entsprechenden Schweißverbindungen 41 befinden sich vorzugsweise an den jeweils axial verlaufenden Abschnitten der Verbindung, sind in Fig. 10 als sich axial erstreckenden Verbindungen dargestellt, können aber auch Punktschweißverbindungen sein. Des Weiteren können zusätzliche Elemente am Führungsrohr befestigt werden. Konkret in Fig. 10 dargestellt ist ein Verstärkungsprofil 39, das mit sich in axialer Richtung verteilenden Schweißstellen 42 die Schwalbenschwanzverbindung überbrückend am Führungsrohr befestigt ist. Zusätzlich kann ein weiteres Element wie beispielsweise das in der Fig. 10 dargestellte Crashelement 40 befestigt werden, wiederum über entsprechende Schweißstellen 43.

Es zeigt sich, dass aus einer derartigen Nachbearbeitung zu einer Baugruppe gemäß Fig. 10, insbesondere wenn Schweißvorgänge durchlaufen werden, gegebenenfalls noch gewisse Massverzüge resultieren können. Wird mit anderen Worten die Verbesserung der Rundheit vor diesen Bearbeitungsschritten durchgeführt, kann gegebenenfalls der durch dieses Verfahren erreichte Zusatznutzen der besseren Präzision der Lageaufnahmestellen wieder vernichtet werden. Entsprechend kann bevorzugtermassen so vorgegangen werden, dass zunächst diese weiteren Bearbeitungsschritte (Verschweißen der Schwalbenschwanzverbindung sowie Anschweißen von weiteren Elementen) durchgeführt werden, und erst dann das in Fig. 9 dargestellte und oben beschriebene Verfahren zur Verbesserung der Rundheit in den Endbereichen durchgeführt wird. Generell kann gesagt werden, dass das Verfahren zur Verbesserung der Rundheit in den Endbereichen bevorzugtermassen so kurz wie möglich vor (d.h. zum Beispiel als letzter Verarbeitungsschritt vor) der effektiven Einbringung der Lagerstellen in die verbesserten Endbereiche des Lagerungskastens angewendet wird.

**BEZUGSZEICHENLISTE**

| | | | |
|---|---|---|---|
| 1 | Lagereinheit | 19 | Durchsetzung als |
| 2 | Lenkspindel | | Lageranschlag |
| 3 | kastenförmiges Aussengehäuse von 1 | 20 | Längsachse von Führungsrohr |
| 4 | Führungsrohr | 21 | Handling-Streifen |
| 5 | Befestigungselement für Funktionsbauteile | 22 | oberer Krümmungsbereich des Führungsrohrs |
| 6 | Befestigungselement für | 24,25 | Knick im Übergang zu 14/15 |
| | schwenkbare direkte oder indirekte Befestigung am | 26 | unterer Krümmungsbereich des Führungsrohrs |
| | Chassis | 27 | Mittellinie |
| 7 | äussere Lagerschale von | 28 | untere Matritze |
| | Lenkspindel | 29 | obere Matritze |
| 8 | Verbindungselement für | 30 | zylindrischer Dorn |
| | kraftschlüssige axiale Festlegung der Position von 4 | 30' | zylindrische Aussenfläche von 30 |
| | in 3 | 31 | Anlagebereich von 28 |
| 9 | Lagerungskugeln | 31' | Umfangsanlagebereich von |
| 10 | Vertiefungen in 3 für 9 | | 28 |
| 11 | Kugeln von | 32 | Anlagebereich von 29 |
| | Lenkspindellagerung | 32' | Umfangsanlagebereich von |
| 12 | Zip-Verschluss von | | 29 |
| | Führungsrohr | 33 | Freistanzung, Einschnitt in |
| 13 | Sicke in Führungsrohr | | Umfangsrichtung im |
| 14 | untere axiale Rippe | | Sickenbereich |
| 15 | obere axiale Rippe | 34 | kontaktloser Bereich bei 26 |
| 16 | Innenraum von Führungsrohr | 35 | kontaktloser Bereich bei 22 |
| 17 | vorderes Ende von Führungsrohr | 36 | Übergangsbereich von 22 zu 15 |
| 18 | hinteres Ende von Führungsrohr | 37 | Übergangsbereich von 26 zu 14 |
| 38 | Führungsöffnungen39 | | |
| | Verstärkungsprofil | 42 | Schweissstelle an |
| 40 | Crashelement | | Verstärkungsprofil |
| 41 | Schweissstelle an Schwalbenschwanzverbindung | 43 | Schweissstelle am Crashelement |

## Patentansprüche

1. Führungsrohr (4) zur drehbaren Lagerung einer Lenkspindel (2) eines Kraftfahrzeugs, wobei das Führungsrohr (4) aus einem einzigen Blechabschnitt zylindrisch gerollt und an einer axialen Kontaktstelle (12) verbunden ist, und wobei das Führungsrohr (4) Elemente (13-15) zur festlegbar axial verschieblichen Befestigung in einer Lagereinheit (1) aufweist,
**dadurch gekennzeichnet, dass**
die Elemente (13-15) in Form von wenigstens zwei über den Umfang verteilten, axial verlaufenden, umfangsmässig beidseits von den Zylinderumfang erweiternden Rippen (14,15) gebildete Sicken (13) ausgebildet sind, die im Blechabschnitt ausgeformt sind.

2. Führungsrohr (4) nach Anspruch 1, **dadurch gekennzeichnet, dass** genau zwei Sicken (13) ausgebildet sind, und diese symmetrisch auf zwei gegenüberliegende Seiten gerichtet sind.

3. Führungsrohr (4) nach Anspruch 2, **dadurch gekennzeichnet, dass** die beiden Sicken (13) im gleichen Halbraum bezogen auf eine zentrale Achse (20) des Führungsrohrs (4) angeordnet sind.

4. Führungsrohr (4) nach einem der Ansprüche 2 oder 3, **dadurch gekennzeichnet, dass** die axiale Kontaktstelle (12) an einem Umfangsabschnitt (26) zwischen den beiden Sicken (13) angeordnet ist, vorzugsweise am längeren Umfangsabschnitt (26).

5. Führungsrohr (4) nach einem der vorhergehenden Ansprüche, **dadurch gekennzeichnet, dass** sich die Sicken (13) über die gesamte axiale Länge des Führungsrohrs (4) erstrecken.

6. Führungsrohr (4) nach einem der vorhergehenden Ansprüche, **dadurch gekennzeichnet, dass** die Sicken (13) eine von einer Kreisform verschiedene Aussenkontur bilden, so dass darin laufende Kugeln (9) an zwei gegenüberliegenden definierten Punkten an Flanken der Rippen (14,15) zur Anlage kommen.

7. Führungsrohr (4) nach einem der vorhergehenden Ansprüche, **dadurch gekennzeichnet, dass** es aus einem Metall, vorzugsweise aus einem Stahl, oder Schwarzstahl besteht, vorzugsweise mit einer Dicke im Bereich von 1.5-2.5 mm.

8. Führungsrohr (4) nach einem der vorhergehenden Ansprüche, **dadurch gekennzeichnet, dass** zusätzlich Durchsetzungen (19) als Anschläge für die äussere Lagerschale (7) der Lenkspindel (2) vorgesehen sind, wobei an einem, oder an beiden Enden (17,18) des Führungsrohrs (4) wenigstens zwei, oder wenigstens 3 derartige Durchsetzungen (19) über den Umfang verteilt angeordnet sein können.

9. Führungsrohr (4) nach einem der vorhergehenden Ansprüche, **dadurch gekennzeichnet, dass** das der Blechabschnitt an der Kontaktstelle (12) über eine Schweissverbindung und/oder Punktschweissverbindung und/oder eine Schwalbenschwanzverbindung verbunden ist.

10. Verfahren zur Herstellung eines Führungsrohrs (4) nach einem der vorhergehenden Ansprüche, **dadurch gekennzeichnet, dass** ausgehend von einem gestanzten Blechabschnitt in einem Umformprozess das Führungsrohr (4) gerollt und gleichzeitig die Rippen (14,15) und die Sicken (13) ausgebildet werden.

11. Verfahren nach Anspruch 10, **dadurch gekennzeichnet, dass** das Verfahren mehrstufig durchgeführt wird und die einzelnen Umfangsabschnitte sequenziell von einer zentralen axialen Mittellinie (27) ausgehend auf beide Seiten umgeformt werden und in einem letzten Schritt an der Kontaktstelle (12) das Führungsrohr (4) geschlossen wird, vorzugsweise unter Verwendung von ausschliesslich Umformvorgängen und ohne Schweissvorgänge.

12. Verfahren nach einem der Ansprüche 10 oder 11, **dadurch gekennzeichnet, dass** das Verfahren wenigstens vier, oder wenigstens acht Stufen, oder zwischen 8 und 12 Stufen aufweist.

13. Verfahren nach einem der vorhergehenden Ansprüche 10-12, **dadurch gekennzeichnet, dass** der gestanzte Blechabschnitt an wenigstens einem, vorzugsweise an den beiden axialen Enden Handling-Abschnitte (21) aufweist, die im Bereich der axialen Mittellinie (27) mit dem Blech des eigentlichen Führungsrohrs (4) während des Herstellungsverfahrens verbunden sind und danach vom Führungsrohr (4) abgetrennt werden.

14. Verfahren nach einem der vorhergehenden Ansprüche 10-13, **dadurch gekennzeichnet, dass** nach dem Schliessen des Führungsrohres (4), ohne Nachbearbeitung oder nach Nachbearbeitung in Form von wenigstens einer der folgenden Operationen:Verschweissen einer erzeugten Schwalbenschwanzverbindung an der Kontaktstelle (12), Anschweissen von weiteren Elementen unter Einschluss von Verstärkungsprofilen und Crashelementen, am Führungsrohr (4), dieses wenigstens in einem der zur Aufnahme des Lagers vorgesehenen Endbereiche zur Erhöhung der Rundheit nachbearbeitet wird, indem ein zylindrischen Dorn (30) in den Innenraum (16) des Endbereichs eingeführt wird und mit zwei Matrizen (28,29) in Umfangsrichtung des Dorns zum plastischen Fliessen gebracht wird, vorzugsweise indem die Matrizen (28,29), in einem Arbeitsschritt auf beiden Seiten des Führungsrohres (4), über entsprechende Anlagebereiche (31,32) den Übergangsbereich vom unteren Krümmungsbereich (26) zur unteren axialen Rippe (14) in Umfangsrichtung auf den Übergangsbereich vom oberen Krümmungsbereich (22) zur oberen axialen Rippe (15) durch Krafteinleitung verschieben.

15. Verfahren nach Anspruch 14, **dadurch gekennzeichnet, dass** wenigstens einer der Anlagebereiche (31,32), vorzugsweise beide, einen dem Aussenumfang des Führungsrohres (4) über einen begrenzten Umfangsabschnitt folgenden, der jeweiligen Rippe (14,15) abgewandten Umfangsanlagebereich (31', 32') aufweist.

## Claims

1. A guide tube (4) for the rotatable mounting of a steering spindle (2) of a motor vehicle, wherein the guide tube (4) is rolled cylindrically from a single metal sheet portion and is connected at an axial contact point (12), and wherein the guide tube (4) has elements (13-15) for the definably axially displaceable fastening in a bearing unit (1),
**characterized in that** the elements (13-15) are configured in the form of at least two beads (13),
which are distributed over the circumference, are axially running, and are formed circumferentially on both sides by ribs (14, 15) that broaden the cylinder circumference, which beads are shaped in the metal sheet portion.

2. The guide tube (4) as claimed in claim 1, **characterized in that** precisely two beads (13) are configured, and these are directed symmetrically at two opposite sides.

3. The guide tube (4) as claimed in claim 2, **characterized in that** the two beads (13) are disposed in the same half-space, in relation to a center axis (20) of the guide tube (4).

4. The guide tube (4) as claimed in one of claims 2 or 3, **characterized in that** the axial contact point (12) is preferably disposed on a circumferential portion (26) between the two beads (13), preferably on the longer circumferential portion (26).

5. The guide tube (4) as claimed in one of the preceding claims, **characterized in that** the beads (13) extend over the entire axial length of the guide tube (4).

6. The guide tube (4) as claimed in one of the preceding claims, **characterized in that** the beads (13) form an outer contour different from a circular form, so that therein running balls (9) come to bear at two opposite defined points against flanks of the ribs (14, 15).

7. The guide tube (4) as claimed in one of the preceding claims, **characterized in that** it consists of a metal, preferably of a steel, or a black steel, preferably having a thickness in the region of 1.5-2.5 mm.

8. The guide tube (4) as claimed in one of the preceding claims, **characterized in that** clinches (19) are additionally provided as stops for the outer bearing bushing (7) of the steering spindle (2), wherein at one end, or at both ends (17, 18) of the guide tube (4), at least two, or at least 3 clinches (19) of this type can be arranged distributed over the circumference.

9. The guide tube (4) as claimed in one of the preceding claims, **characterized in that** the metal sheet portion is connected at the contact point (12) by a welded joint and/or spot-welded joint and/or a dovetail joint.

10. A method for producing a guide tube (4) as claimed in one of the preceding claims, **characterized in that**, starting from a stamped metal sheet portion, in a forming process the guide tube (4) is rolled and, at the same time, the ribs (14, 15) and the beads (13) are configured.

11. The method as claimed in claim 10, **characterized in that** the method is implemented in multiple stages and the individual circumferential portions are formed sequentially, starting from a central axial center line (27), on both sides, and in a last step, at the contact point (12), the guide tube (4) is closed, preferably using exclusively forming operations and without any welding operations.

12. The method as claimed in one of claims 10 or 11, **characterized in that** the method has at least four, or at least eight stages, or between 8 and 12 stages.

13. The method as claimed in one of the preceding claims 10-12, **characterized in that** the stamped metal sheet portion has at at least one, preferably at both axial ends handling portions (21), which in the region of the axial center line (27) are connected to the sheet of the actual guide tube (4) during the production method and are afterwards separated from the guide tube (4).

14. The method as claimed in one of the preceding claims 10-13, **characterized in that** after the closure of the guide tube (4), without or after reworking, in the form of at least one of the following operations: welding of a created dovetail joint at the contact point (12), welding of further elements, including reinforcement profiles and crash elements, onto the guide tube (4), this, at least in one of the end regions intended to receive the bearing, is reworked in order to increase the roundness, by a cylindrical mandrel (30) being introduced into the interior (16) of the end region and being made with two dies (28, 29) to flow plastically in the circumferential direction of the mandrel, preferably by the dies (28, 29), in one work step on both sides of the guide tube (4), by means of corresponding contact regions (31, 32), displacing the transition region from the lower area of curvature (26) to the lower axial rib (14) in the circumferential direction of the transition region from the upper area of curvature (22) to the upper axial rib (15), through the application of force.

15. The method as claimed in claim 14, **characterized in that** at least one of the contact regions (31, 32), preferably both, has a circumferential contact region (31', 32') which follows the outer circumference of the guide tube (4) over a limited circumferential portion and faces away from the respective rib (14, 15).

## Revendications

1. Tube de guidage (4) destiné au soutien rotatif d'un arbre de direction (2) d'un véhicule automobile, dans lequel le tube de guidage (4) est enroulé en cylindre à partir d'une seule partie de tôle et est assemblé en un point de contact axial (12), et dans lequel le tube de guidage (4) présente des éléments (13-15) pour la fixation glissante pouvant être fixée axialement dans une unité de palier (1), **caractérisé en ce que** les éléments (13-15) sont réalisés en forme d'au moins deux moulures (13) réparties sur la périphérie, s'étendant axialement et formées en périphérie de part et d'autre par des nervures (14, 15) élargissant la périphérie du cylindre, qui sont façonnées dans la partie de tôle.

2. Tube de guidage (4) selon la revendication 1, **caractérisé en ce que** deux moulures (13) exactement sont formées, et celles-ci sont orientées de façon symétrique sur deux côtés opposés.

3. Tube de guidage (4) selon la revendication 2, **caractérisé en ce que** les deux moulures (13) sont disposées dans la même moitié par rapport à un axe central (20) du tube de guidage (4).

4. Tube de guidage (4) selon une des revendications 2 ou 3, **caractérisé en ce que** le point de contact axial (12) est disposé sur une partie de la périphérie (26) entre les deux moulures (13), de préférence sur la plus longue partie de la périphérie (26).

5. Tube de guidage (4) selon l'une quelconque des revendications précédentes, **caractérisé en ce que** les moulures (13) s'étendent sur toute la longueur axiale du tube de guidage (4).

6. Tube de guidage (4) selon l'une quelconque des revendications précédentes, **caractérisé en ce que** les moulures (13) forment un contour extérieur différent d'une forme circulaire, de telle manière que des billes (9) roulant dans celles-ci viennent s'appliquer en deux points opposés définis sur les flancs des nervures (14, 15).

7. Tube de guidage (4) selon l'une quelconque des revendications précédentes, **caractérisé en ce qu'**il se compose d'un métal, de préférence d'un acier, ou d'acier noir, de préférence avec une épaisseur dans la plage de 1,5 à 2,5 mm.

8. Tube de guidage (4) selon l'une quelconque des revendications précédentes, **caractérisé en ce qu'**il est prévu en outre des traversées (19) comme butées pour la coquille de coussinet extérieure (7) de l'arbre de direction (2), dans lequel au moins deux, ou au moins trois de ces traversées (19) réparties sur la périphérie peuvent être disposées à une ou aux deux extrémités (17, 18) du tube de guidage (4).

9. Tube de guidage (4) selon l'une quelconque des revendications précédentes, **caractérisé en ce que** la partie de tôle est assemblée au point de contact (12) par un assemblage soudé et/ou une soudure par points et/ou un assemblage à queue d'aronde.

10. Procédé de fabrication d'un tube de guidage (4) selon l'une quelconque des revendications précédentes, **caractérisé en ce que**, à partir d'une partie de tôle découpée, on enroule le tube de guidage (4) dans un processus de déformation et on forme en même temps les nervures (14, 15) et les moulures (13).

11. Procédé selon la revendication 10, **caractérisé en ce que** le procédé est exécuté en plusieurs étapes et les parties périphériques individuelles sont déformées sur les deux côtés de façon séquentielle en partant de la ligne axiale centrale (27) et dans une dernière étape le tube de guidage (4) est fermé au point de contact (12), de préférence en utilisant uniquement des opérations de déformation et pas des opérations de soudage.

12. Procédé selon une des revendications 10 ou 11, **caractérisé en ce que** le procédé présente au moins quatre, ou au moins huit étapes, ou entre 8 et 12 étapes.

13. Procédé selon l'une quelconque des revendications précédentes 10 à 12, **caractérisé en ce que** la partie de tôle découpée présente à au moins une, de préférence aux deux extrémités axiales, des parties de manipulation (21), qui sont assemblées dans la région de la ligne centrale axiale (27) à la tôle du tube de guidage proprement dit (4) pendant le procédé de fabrication, et qui sont ensuite séparées du tube de guidage (4).

14. Procédé selon l'une quelconque des revendications 10 à 13, **caractérisé en ce qu'**après la fermeture du tube de guidage (4), sans parachèvement ou après parachèvement sous la forme d'au moins une des opérations suivantes: soudage d'un assemblage à queue d'aronde produit au point de contact (12), soudage d'autres éléments y compris des profilés de renforcement et des éléments pour les collisions, sur le tube de guidage (4), celui-ci est parachevé au moins dans une des régions d'extrémité prévues pour le placement du palier en vue d'augmenter la rondeur, par le fait que l'on introduit un mandrin cylindrique (30) dans l'espace intérieur (16) de la région d'extrémité et on provoque un écoulement plastique avec deux matrices (28, 29) dans la direction périphérique du mandrin, de préférence par le fait que les matrices (28, 29) déplacent, en une étape de travail sur les deux côtés du tube de guidage (4), sur des régions d'application correspondantes (31, 32), la région de transition de la région courbe inférieure (26) à la nervure axiale inférieure (14) en direction périphérique vers la région de transition de la région courbe supérieure (22) à la nervure axiale supérieure (15) par une introduction de force.

15. Procédé selon la revendication 14, **caractérisé en ce qu'**au moins une des régions d'application (31, 32), de préférence les deux, présente une région d'application périphérique (31', 32') détournée de la nervure respective (14, 15) et suivant la périphérie extérieure du tube de guidage (4) sur une partie limitée de la périphérie.
